# EUROPEAN PATENT APPLICATION

(11) **EP 4 738 790 A1**
(43) Date of publication of application: **06.05.2026**
(21) Application number: 25211438.4
(22) Date of filing: 27.10.2025
(51) Int. Cl.: H04L 49/253, H04L 49/00, H04L 45/00, H04L 45/28

(54) **SYSTEMS AND METHODS FOR MANAGING DEVICE FAILOVER AND DATA ROUTING IN NETWORK SYSTEMS**

(30) Priority: 29.10.2024 US 202418929879
(71) Applicant: Avago Technologies International Sales Pte. Limited, Singapore 768923 (SG)
(72) Inventor: Khaparde, Ajit Kumar, Irvine, 92603 (US)
(74) Representative: Dilg, Haeusler, Schindelmann Patentanwaltsgesellschaft mbH

(57) **Abstract**

The subject technology is directed to a device for managing inrush current in voltage regulation systems. The device includes an input configured to receive an input voltage and an output configured to provide an output voltage. The device includes a first circuit configured to generate a first signal associated with the output voltage. The device further includes a first comparator configured to compare the first signal with a first reference voltage and generate a second signal based on the comparison. The device further includes a switch configured to receive the second signal and adjust a first resistance in a current path between the input and the output based on the second signal. The device implements multilevel inrush current control, allowing for dynamic adjustment of the inrush current at different stages of the power-up phase.

## Description

### BACKGROUND OF THE INVENTION

In modern computing and networking environments, reliable and efficient communication between devices is important for maintaining system performance and uptime. Many systems involve multiple devices-such as network interface cards (NICs), storage devices, and processing units-that work together to handle high-volume data traffic. These devices may be interconnected through switches, which manage data routing between devices and external systems, including host systems and other endpoints.

Some approaches for data transfer between devices rely on direct memory access (DMA), which allows devices to access memory directly without burdening the central processing unit (CPU). This improves overall efficiency by reducing processing overhead and enabling faster data transfers. For instance, peripheral component interconnect express (PCIe) is a standard that supports high-speed communication between devices, such as NICs, processing units, and storage controllers. PCIe enables direct connections between devices via a bus structure, facilitating efficient data flow between multiple endpoints through switches.

As systems become more complex, especially with high-performance workloads such as artificial intelligence (AI) and machine learning (ML), the likelihood of device failures increases. These workloads often rely on multiple devices working together in a coordinated manner, and a failure in one device can have cascading effects throughout the system. For example, when a NIC that transfers data to one or more processing units fails, the associated processing units may be left unused, causing a loss of processing power and reducing overall system efficiency.

Various approaches for addressing device failure in complex systems have been explored, but they have proven to be insufficient. It is important to recognize the need for new and improved systems and methods.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a block diagram illustrating an architecture of a computing system, in accordance with various embodiments of the subject technology.
Figure 2 is a block diagram illustrating an architecture of a computing system, in accordance with various embodiments of the subject technology.
Figure 3 is a block diagram illustrating a switch apparatus, in accordance with various embodiments of the subject technology.

### DETAILED DESCRIPTION OF THE INVENTION

The subject technology is directed to a switch apparatus for managing device states and data traffic between multiple devices. In an embodiment, the switch apparatus includes a first port coupled to a first device and a second port coupled to a second device. The apparatus further includes a controller configured to assign an active state to the first device and a passive state to the second device. The apparatus further includes a scheduler configured to monitor the operational status of the first device and detect a failure. Upon detecting the failure, the controller reassigns the active state to the second device and the passive state to the first device, ensuring continuous data traffic flow and reducing downtime through dynamic switching. There are other embodiments as well.

One general aspect includes a switch apparatus, which comprises: a first port coupled to a first device; a second port coupled to a second device; a controller coupled to the first port, the controller being configured to assign an active state to the first device and a passive state to the second device; a scheduler coupled to the controller, the scheduler being configured to monitor an operational status of the first device by detecting a first failure associated with the first device; and a routing unit coupled to the controller, the routing unit being configured to determine a first routing path between the first device and the first port for managing data traffic, the routing unit comprising a route table configured to store the first routing path. In response to the scheduler detecting the first failure, the controller is configured to reassign the active state from the first device to the second device and the passive state from the second device to the first device, and the routing unit is configured to determine a second routing path between the second device and the second port and update the route table to store the second routing path.

Implementations may include one or more of the following features. The first device comprises a first network interface card (NIC) and the second device comprises a second NIC. The scheduler is configured to monitor the operational status of the first device based on a predefined time interval. The first failure is detected based on a loss of electrical connectivity between the first device and the first port. The first failure is detected based on an error in a configuration space of the first device. The first failure is detected based on a success rate of data transactions between the first device and the first port. The switch apparatus further comprises a third port coupled to a third device. The third device comprises a graphics processing unit (GPU). The third device comprises a storage device. The first device is coupled to the second device via a peripheral component interconnect express (PCIe) interface. The switch apparatus further comprises a fourth port coupled to a host, and the controller being configured to communicate the active state of the first device to the host.

According to another embodiment, the subject technology provides a switch apparatus, which comprises: a first port coupled to a first device; a second port coupled to a second device; a controller coupled to the first port, the controller being configured to assign an active state to the first device and a passive state to the second device; a scheduler coupled to the controller, the scheduler being configured to monitor an operational status of the first device by detecting a first failure associated with the first device; and a routing unit coupled to the controller, the routing unit being configured to determine a first routing path between the first device and the first port for managing data traffic. In response to the scheduler detecting the first failure, the controller is configured to reassign the active state from the first device to the second device and the passive state from the second device to the first device, and the routing unit is configured to determine a second routing path between the second device and the second port.

Implementations may include one or more of the following features. The first device comprises a first network interface card (NIC). The first failure is detected based on a loss of electrical connectivity between the first device and the first port. The first failure is detected based on an error in a configuration space of the first device. The first failure is detected based on a success rate of data transactions between the first device and the first port.

According to yet another embodiment, the subject technology provides a method, which comprises: assigning, by a controller, an active state to a first device coupled to a first port and a passive state to a second device coupled to a second port; monitoring, by a scheduler, an operational status of the first device; determining, by a routing unit, a first routing path between the first device and the first port for managing data traffic; in response to detecting a first failure associated with the first device, reassigning the active state to the second device and the passive state to the first device; and determining, by the routing unit, a second routing path between the second device and the second port for managing data traffic. In various embodiments, the first device comprises a first network interface card (NIC) and the second device comprises a second NIC. The first failure is detected based on a loss of electrical connectivity between the first device and the first port.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent, or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

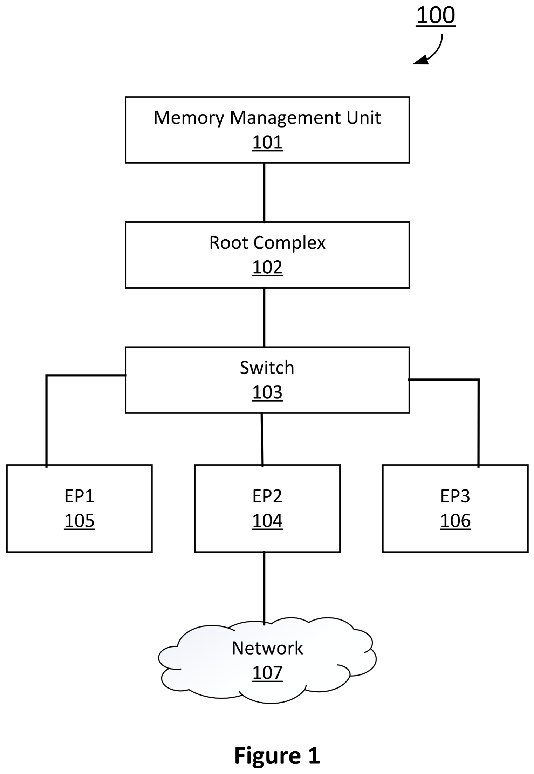

Figure 1 is a block diagram illustrating an architecture of a computing system 100, in accordance with various embodiments of the subject technology. This diagram merely provides an example, which should not unduly limit the scope of the claims. One of ordinary skill in the art would recognize many variations, alternatives, and modifications.

In various implementations, system 100 represents a distributed computing architecture that interconnects multiple hardware components to facilitate seamless communication and high-speed data transfers. For example, system 100 is designed to support high-speed communication between multiple devices, such as network interface cards (NICs), graphics processing units (GPUs), and storage controllers. These devices are interconnected through a switch, which facilitates data routing between devices and external systems such as host systems and other endpoints. System 100 can be applied in various computing environments, such as data centers, AI/ML workloads, cloud computing, high-performance computing systems, and/or the like.

Depending on the implementation, system 100 may utilize direct memory access (DMA) to transfer data between components. For instance, the term "direct memory access" may refer to a process in which devices can transfer data directly between their own memory and the system memory without needing intervention from the central processing unit (CPU). This mechanism reduces CPU overhead and accelerates data transfer rates, which is beneficial in high-performance computing environments where multiple devices frequently exchange large amounts of data. In AI/ML workloads, for example, a NIC could directly transfer data to a GPU for processing without requiring the CPU to handle each transaction.

In various implementations, PCI Express (PCIe) is used to facilitate high-speed communication between the components. PCIe is a high-speed serial bus interface that allows for low-latency, high-bandwidth data exchanges between connected devices, such as CPU, memory, NICs, GPUs, and storage controllers. It supports chip-to-chip and board-to-board interconnections via cards and connectors, allowing multiple devices to communicate through shared data pathways. PCIe is useful in high-performance computing environments where large volumes of data need to be transmitted efficiently between processing units and memory.

As shown, system 100 includes memory management unit (MMU) 101, which may be configured to manage memory access across devices within system 100. It translates virtual addresses (e.g., used by software) into physical addresses (e.g., used by hardware) to ensure that devices connected to system 100 can access the appropriate memory locations. Examples of memory management units may include, without limitation, I/O memory management unit (IOMMU), CPU MMU, GPU MMU, virtual MMU, and/or the like. Depending on the implementation, MMU 101 may be implemented as a separate dedicated hardware unit or integrated directly within the CPU as part of the system-on-chip (SoC) architecture.

In various implementations, system 100 includes root complex 102. The term "root complex" may refer to a central component in the PCIe hierarchy that connects the host system (e.g., CPU and/or system memory) to the PCIe devices or endpoints. Root complex 102 serves as the communication bridge between the PCIe fabric and the host system, managing communication between upstream and downstream devices. During system initialization, root complex 102 may perform device enumeration, identifying the PCIe devices connected to the system and assigning addresses to each device.

In some embodiments, system 100 further includes a switch 103. For example, the term "switch" may refer to a hardware component that facilitates communication between multiple devices by managing the flow of data across shared communication pathways. Examples of switches may include, without limitation, PCIe switches, Ethernet switches, InfiniBand switches, fibre channel switches, and/or the like. In some examples, switch 103 includes a PCIe switch, which is designed to connect various PCIe-compatible devices such as NICs, GPUs, storage devices, and other peripheral devices. The PCIe switch acts as an intermediary between these devices and root complex 102, facilitating high-speed data transfers between devices on the PCIe bus.

In various embodiments, system 100 may include one or more endpoint devices (e.g., devices 104, 105, 106). For instance, the term "endpoint" or "endpoint device" may refer to any device connected to a shared bus that communicates with other components in the system through a switch or root complex. Examples of endpoints may include, without limitation, NICs, GPUs, storage devices, and/or other peripheral devices. For example, device 104 may include a first NIC, responsible for handling network communication and data transfers to and from external networks. In systems where large amounts of data need to be ingested or distributed, such as in cloud computing or high-performance data centers, NICs are beneficial for efficiently moving data across the system.

In some examples, device 105 may include a first GPU, and device 106 may include a second GPU. GPUs may be used for handling computationally intensive tasks such as AI model training, parallel data processing, or high-speed rendering. In various AI/ML workloads, multiple GPUs may be employed to handle the processing of vast datasets, increasing computational throughput and reducing the time required to complete large-scale computations.

In various implementations, these endpoint devices work together to achieve high-speed data transfers across the system. For instance, in AI/ML workloads, data from an external network (e.g., network 107) may be delivered to device 104 (e.g., the first NIC), which then transfers the data to device 105 (e.g., the first GPU) for processing. The processed data may then be shared with device 106 (e.g., the second GPU) for additional computations or stored in an external storage device, all facilitated by switch 103.

However, as system 100 grows in complexity-particularly in high-performance environments such as data centers, AI/ML applications, and cloud computing-the risk of device failures also increases. Devices such as NICs or GPUs can experience failures due to hardware malfunctions, network issues, or other factors, potentially leaving expensive resources like GPUs underutilized or idle. For example, if a NIC (e.g., device 104) responsible for transferring data to a GPU (e.g., device 105) fails, the GPU may not receive the necessary data for processing, resulting in a loss of processing power and reducing overall system efficiency. Therefore, it is desirable for system 100 to implement high-availability configurations that ensure continuous performance even in the event of hardware failures.

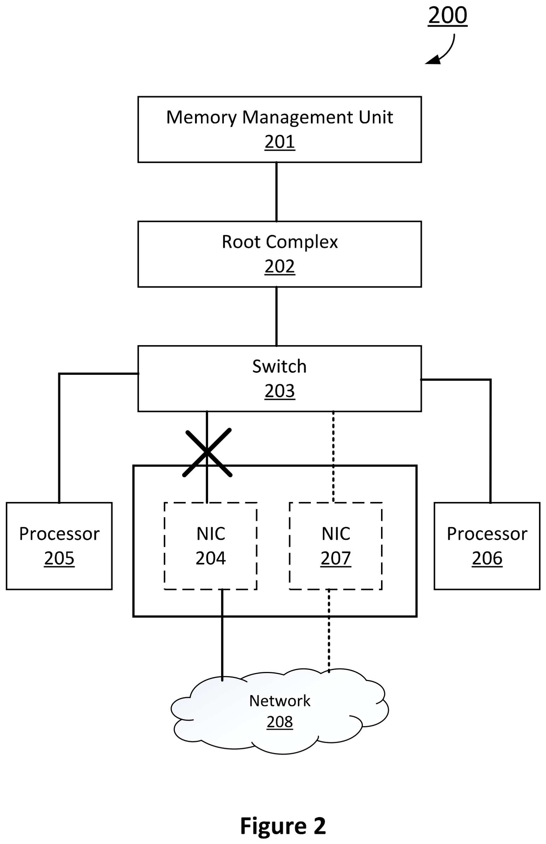

Figure 2 is a block diagram illustrating an architecture of a computing system 200, in accordance with various embodiments of the subject technology. This diagram merely provides an example, which should not unduly limit the scope of the claims. One of ordinary skill in the art would recognize many variations, alternatives, and modifications.

In various implementations, system 200 represents a distributed computing architecture that interconnects multiple hardware components to facilitate seamless communication and high-speed data transfers. For instance, system 200 may include at least one of MMU 201, root complex 202, switch 203, and/or one or more endpoint devices. In various examples, one or more endpoint devices may include first NIC 204, second NIC 207, first processor 205, and second processor 206. These endpoint devices are connected to switch 203, which manages data flow between the endpoints and the external network 208. MMU 201 manages access to shared memory resources, while root complex 202 serves as the bridge between switch 203 and the host system, facilitating communication between the CPU, memory, and the various endpoint devices.

In some embodiments, one or more NICs (e.g., first NIC 204 and/or second NIC 207) may be responsible for receiving data from network 208 and performing DMA transfers to one or more processors (e.g., first processor 205 and/or second processor 206) for computation. In various examples, first processor 205 and second processor 206 may include one or more GPUs, which are configured to handle computationally intensive tasks such as AI model training, parallel data processing, or high-speed rendering. DMA allows data to be transferred directly from the NIC to system memory and/or to the peer devices (e.g., GPUs), bypassing the CPU, which reduces overhead and increases the overall data transfer efficiency.

However, like any component in the system, a NIC may encounter errors, such as hardware malfunctions, network issues, or other factors. When a NIC fails, it may lose its ability to transfer data, and in some cases, this could leave multiple GPUs without the data they need for processing. Since GPUs are typically much more expensive than NICs, failures in a NIC can result in significant underutilization of costly computational resources, leading to inefficiencies in the system's operation.

To address this issue, system 200 may implement a failover mechanism to ensure uninterrupted operation in the event of NIC failure. This mechanism allows the system to dynamically switch from a failing NIC to a backup NIC, ensuring that the system remains operational and that GPU resources continue to be fully utilized. By automatically detecting errors and rerouting data traffic to a functional NIC, system 200 maintains high availability and minimizes downtime, providing an efficient and reliable computing environment.

According to some embodiments, the operation of system 200 begins with an enumeration process during system initialization. During enumeration, root complex 202 identifies all the devices connected through switch 203 and assigns each device a unique address for communication. This process ensures that each endpoint device, such as NICs and processors, is recognized by system 200 and is ready to communicate with root complex 202 and other components.

In some examples, the enumeration process may involve determining the operational status of the connected NICs. These states dictate the roles that each NIC will play within the system. For instance, the term "operational status" may refer to the current state or mode of operation assigned to a particular device, such as whether the device is active, passive, or in standby. The operational status may be determined by monitoring various metrics, such as device activity, data transfer success rates, network connectivity, error detection, and/or the like.

In some embodiments, first NIC 204 may be initially assigned an active state. For instance, the term "active state" may refer to a condition in which a device (e.g., a NIC), is responsible for handling active data transmissions between the system and an external network (e.g., network 208). In this state, the NIC operates as the primary network interface, actively participating in sending and receiving data. On the other hand, second NIC 207 may be placed in a passive state during normal operation. For example, the term "passive state" may refer to a standby condition in which a device (e.g., a NIC) remains idle but ready to take over in the event of a failure in the active device. A device in the passive state does not handle active data transmission but monitors the system for potential failover scenarios. In the passive state, second NIC 207 is hidden from the system's operational flow to prevent conflicts within the system's device hierarchy.

During normal operation, the active NIC (e.g., first NIC 204) manages all data transmissions between system 200 and external devices, including communication with network 208 and other internal system components such as processors. In the meantime, the passive NIC (e.g., second NIC 207) remains inactive but is continuously ready to take over if a failure occurs. Throughout this process, switch 203 is responsible for monitoring the operational status of the active NIC to detect any potential issues or malfunctions.

Depending on the implementation, switch 203 continuously monitors the operational status of first NIC 204 through various methods. For example, failure detection can be based on the loss of electrical connectivity between first NIC 204 and switch 203, firmware errors, or by monitoring the error rate during data transmission. If switch 203 detects a loss of network connectivity or a high rate of transmission failures, this can trigger the failover mechanism. Other failure detection mechanisms may include checking the health status reported by the NIC's internal diagnostics or receiving an error signal when the NIC fails to respond to regular data requests.

When a failure is detected in first NIC 204, Switch 203 immediately triggers the failover process. Switch 203 may reassign the active state to second NIC 207, making it the new primary network interface, while placing first NIC 204 in a passive state for further investigation or repair. In the passive state, first NIC 204 becomes hidden from the host system, meaning the host system no longer sees it in the device hierarchy, preventing the host from attempting to communicate with a malfunctioning device. Second NIC 207 now takes over all network traffic responsibilities, seamlessly replacing the failed NIC without requiring system reboot or manual intervention. This failover process ensures minimal disruption to system operations, allowing continuous network connectivity and preventing expensive computational resources (e.g., GPUs) from being underutilized.

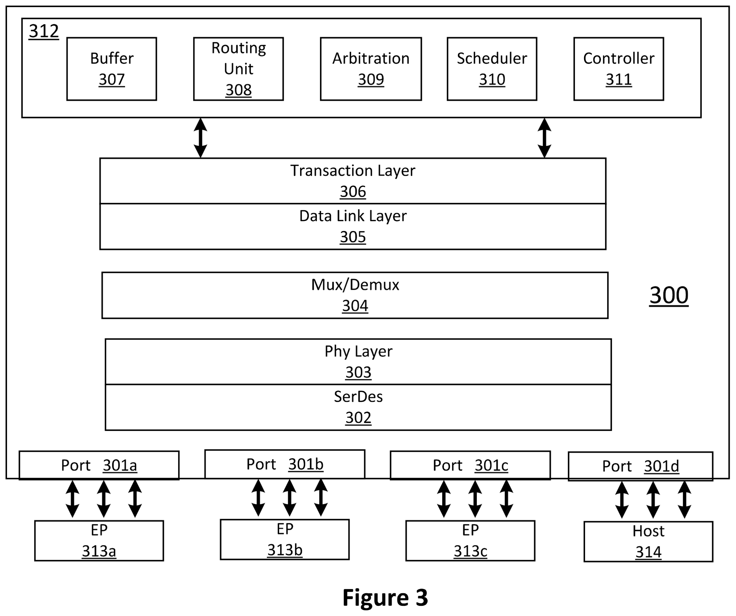

Figure 3 is a block diagram illustrating a switch apparatus 300, in accordance with various embodiments of the subject technology. This diagram merely provides an example, which should not unduly limit the scope of the claims. One of ordinary skill in the art would recognize many variations, alternatives, and modifications.

In various implementations, switch apparatus 300 may be a part of a larger distributed system (e.g., system 200 of Figure 2). Switch 300 may be configured to manage data routing between multiple endpoint devices (e.g., NICs, processors, or other peripherals) and external networks, ensuring seamless communication and high-speed data transfers. In some embodiments, switch apparatus 300 plays a central role in implementing a failover mechanism that ensures continuous operation of the system, even when certain devices fail. This may be achieved by monitoring the operational status of the connected devices (e.g., NICs) and dynamically reconfiguring the data paths when a failure is detected.

As shown, switch apparatus 300 may include one or more ports (e.g., first port 301a second port 301b, third port 301c, fourth port 301d). For example, the term "port" may refer to a physical or logical interface on a switch through which data can be transmitted and received. Ports serve as connection points for endpoint devices (e.g., NICs, processors) and external networks, allowing for the flow of data between these components. Examples of ports may include, without limitation, PCIe ports, Ethernet ports, InfiniBand ports, or other communication interfaces. Depending on the implementation, the ports may function as upstream ports or downstream ports. Upstream ports may connect the switch to upstream components (e.g., the host system or higher-level network), while downstream ports may connect the switch to downstream components (e.g., endpoint devices).

In various implementations, switch apparatus 300 may be implemented as a PCIe switch and may be coupled to one or more endpoint devices. One or more endpoint devices may be connected via a PCIe interface. For instance, the term "PCIe interface" may refer to a physical or logical connection that allows devices to communicate over the PCIe standard. In some embodiments, first port 301a may be configured to couple to first device 313a. Second port 301b may be configured to couple to second device 313b. In some examples, first device 313a may include a first NIC and second device 313b may include a second NIC.

In some cases, third port 301c may be configured to couple to third device 313c, which may include a GPU or a storage device. For instance, the term "storage device" may refer to a hardware component that is used to store and retrieve data. Depending on the application, storage devices can be volatile or non-volatile and are responsible for retaining data either temporarily or permanently. Examples of storage devices may include, without limitation, hard disk drives (HDDs), solid-state drives (SSDs), and/or the like.

In some examples, fourth port 301d may be coupled to host 314. For instance, the term "host" or "host system" may refer to a central computing system that manages and coordinates the operations of connected devices. Host 314 may be responsible for initiating data transfers to and from endpoint devices, assigning device addresses, or managing memory allocation. Host 314 may include, without limitation, a CPU, a memory, an I/O subsystem, and/or the like.

In some embodiments, switch apparatus 300 further includes one or more processing layers that are responsible for various stages of data handling, error detection, and protocol management as data flows through the switch. One or more processing layers may include, without limitation, SerDes layer 302, physical layer 303, mux/demux layer 304, data link layer 305, transaction layer 306, and/or the like.

In some implementations, SerDes layer 302 may include serializer-deserializer circuits that convert parallel data into serial data for transmission over high-speed communication links and then convert serial data back into parallel data for further processing. SerDes layer 302 enables high-speed data transfers by reducing the number of data lines required for communication, which is beneficial for maintaining high data transfer rates between devices.

After the SerDes conversion, the data may move through physical layer 303, which is responsible for handling the physical transmission of data across the communication medium, ensuring that signals are properly synchronized and transmitted with minimal loss. Mux/demux layer 304 manages the flow of data by combining multiple data signals into a single stream (e.g., multiplexing) or separating a single data stream into multiple signals (e.g., demultiplexing). These processing layers enable efficient use of the communication channels by dynamically managing the available bandwidth and ensuring that data is transmitted to the appropriate endpoints.

In various embodiments, data link layer 305 and transaction layer 306 handle the higher-level communication protocols, ensuring that data packets are properly formatted, verified, and transmitted across switch apparatus 300. For instance, data link layer 305 provides error detection and correction mechanisms, ensuring that data transmitted between devices is reliable and free of errors. Transaction layer 306 manages the actual data transfer transactions between devices, determining how data is sent, received, and processed at each endpoint.

According to some embodiments, switch apparatus 300 may include switch core 312. For example, the term "switch core" refers to a central processing unit of a switch that manages the overall data flow and controls how data is routed and processed within the switch. In various examples, switch core 312 plays an important role in ensuring high availability and continuity of system operations when an endpoint device (e.g., a NIC) encounters a failure. By continuously monitoring the status of connected devices and dynamically reassigning their roles (e.g., switching between active and passive states), switch core 312 ensures that data transmission remains uninterrupted, even in the event of hardware or network issues. This process is beneficial in high-performance computing environments, where the failure of a single component could otherwise lead to significant disruptions or underutilization of resources. For instance, switch core 312 may include at least one of buffer 307, routing unit 308, arbitration unit 309, scheduler 310, controller 311, and/or the like.

In various implementations, switch core 312 includes controller 311. For instance, the term "controller" may refer to a hardware component that manages device states and data flow within a switch. Depending on the implementation, controller 308 may be implemented as dedicated hardware modules or as part of a software-defined network system.

In some examples, controller 311 may be configured to determine and assign the states of the devices (e.g., first device 313a and second device 313b) connected to the switch and oversee the switch's overall operation. For example, controller 311 may assign an active state to first device 313a (e.g., a first NIC) and a passive state to second device 313b (e.g., a second NIC). Under normal operating conditions, the active device handles all data transfers, while the passive device remains idle but is ready to take over in case of a failure.

In various embodiments, scheduler 310 may be coupled to controller 311. For example, the term "scheduler" may refer to a component responsible for managing the timing and coordination of tasks within a system. Examples of schedulers may include, without limitation, round robin schedulers, priority-based schedulers, credit-based schedulers, and/or the like. Scheduler 310 may be configured to manage the execution and sequencing of data transmission tasks, ensuring that resources are allocated effectively and that devices operate in sync. Depending on the implementation, scheduler 310 may be configured to coordinate the flow of data, manage the timing of tasks, and/or detect the operational status of endpoint devices.

In various examples, scheduler 310 may work in conjunction with controller 311 to monitor the operational status of connected devices (e.g., first device 313a). For instance, scheduler 310 may be configured to monitor an operational status of first device 313a by detecting a first failure associated with the first device. For example, the term "failure" may refer to any event or condition where a device is unable to perform its expected function or suffers from reduced performance. Failures may include, without limitation, hardware malfunctions, network communication errors, configuration errors, loss of connectivity, and/or the like.

Depending on the implementation, failure detection may be implemented in various ways. For example, scheduler 310 may detect a failure based on a loss of electrical connectivity between the device and the port it is connected to (e.g., first port 301a and first device 313a). This may involve detecting a sudden drop in signal strength or complete signal loss. In some examples, failures may be detected based on configuration space errors, where the configuration registers of first device 313a return invalid or corrupted values, indicating a malfunction.

In some cases, scheduler 310 may monitor the success rate of data transactions between first device 313a and the rest of the system (e.g., first port 301a). If the success rate falls below a predefined threshold, it may indicate that first device 313a is encountering issues. For example, frequent transmission errors, aborted transactions, or dropped packets could be signs of a device malfunction. In various implementations, scheduler 310 may be configured to monitor the operational status of first device 313a based on a predefined time interval. For instance, scheduler 310 may perform regular health checks on first device 313a, such as querying the device for status updates, verifying data integrity, or testing communication responsiveness.

In various implementations, switch core 312 also includes routing unit 308. For example, the term "routing unit" may refer to a component responsible for determining the path data takes within the switch, ensuring that it is directed to the appropriate device or network destination. Routing unit 308 manages data flow by assigning and updating routing paths between ports and connected devices based on the current state of the network and/or the operational status of devices.

In some examples, routing unit 308 may be configured to determine a first routing path between first device 313a and first port 301a for managing data traffic. For instance, the term "routing path" may refer to a communication route that data packets follow to travel between devices within the system. The routing path may be determined based on various factors such as network topology, bandwidth availability, the device's operational state (e.g., active or passive), and/or the like. For instance, when first device 313a is in the active state, routing unit 308 facilitates data transactions by directing data traffic along the first routing path between first device 313a and first port 301a.

In some examples, the routing unit may utilize a routing table, which stores information about the available routes and the status of connected devices. For example, the term "route table" may refer to a database or data structure that maintains a record of possible routing paths for data transmission between devices and ports. In various embodiments, the routing table contains entries for each connected device, specifying which port it is associated with, its current state (e.g., active or passive), and the routing path for data to reach its destination. For example, the routing table may include an entry that stores the first routing path between first device 313a and first port 301a, ensuring that data sent from the system is properly routed to the active NIC. Routing unit 308 may dynamically update the routing table in response to changes in network conditions, such as the failure or recovery of a device.

When a failure is detected by scheduler 310, multiple components within switch apparatus 300 work together to maintain system operation. For instance, in response to scheduler 310 detecting the first failure, controller 311 is configured to reassign the active state from first device 313a to second device 313b and the passive state from second device 313b to first device 313a. Routing unit 308 may configured to determine a second routing path between second device 313b and second port 301b and update the route table to store the second routing path. This dynamic reassignment ensures continuous data flow without interruptions, minimizing downtime and maintaining system reliability even in the event of a device failure.

According to various embodiments, switch core 312 further includes buffer 307. For example, the term "buffer" may refer to a memory element or storage area that is used to temporarily hold data. Buffer 307 serves to smooth out the flow of data by accommodating differences in data transfer rates between different components or devices. For instance, data arriving from a NIC or external network might arrive at a higher rate than the system can process, so buffer 307 temporarily stores this data until the system is ready to process or transmit it to its final destination. In some cases, buffer 307 temporarily holds data packets while routing unit 308 determines the routing path for forwarding the data to its destination. Buffer 307 also plays an important role in failover scenarios, where it holds data while switch core 312 reassigns states (e.g., from an active device to a passive device) and updates the routing table.

In some embodiments, switch core 312 further includes arbitration unit 309. For instance, the term "arbitration unit" may refer to a component responsible for managing access to shared resources, such as data paths or communication channels. In various examples, when multiple devices connected to switch apparatus 300 request access to the same resource simultaneously, arbitration unit 309 decides which device gets priority based on predefined rules or scheduling algorithms. This process ensures that data flows efficiently between devices and prevents resource contention or traffic bottlenecks. Examples of arbitration mechanisms include priority-based arbitration, round-robin arbitration, and weighted fair queuing,

While the above is a full description of the specific embodiments, various modifications, alternative constructions and equivalents may be used. Therefore, the above description and illustrations should not be taken as limiting the scope of the subject technology which is defined by the appended claims.

## Claims

1. A switch apparatus comprising:
a first port coupled to a first device;
a second port coupled to a second device;
a controller coupled to the first port, the controller being configured to assign an active state to the first device and a passive state to the second device;
a scheduler coupled to the controller, the scheduler being configured to monitor an operational status of the first device by detecting a first failure associated with the first device; and
a routing unit coupled to the controller, the routing unit being configured to determine a first routing path between the first device and the first port for managing data traffic;
wherein in response to the scheduler detecting the first failure,
the controller is configured to reassign the active state from the first device to the second device and the passive state from the second device to the first device, and
the routing unit is configured to determine a second routing path between the second device and the second port.

2. The apparatus of claim 1, wherein
the routing unit comprises a route table configured to store the first routing path

3. The apparatus of claim 2, wherein
the routing unit is further configured to update the route table to store the second routing path.

4. The apparatus of any one of the claims 1 to 3, wherein
the first device comprises a first network interface card (NIC) and the second device comprises a second NIC.

5. The apparatus of any one of the claims 1 to 4, wherein
the scheduler is configured to monitor the operational status of the first device based on a predefined time interval.

6. The apparatus of any one of the claims 1 to 5, wherein
the first failure is detected based on a loss of electrical connectivity between the first device and the first port.

7. The apparatus of any one of the claims 1 to 5, wherein
the first failure is detected based on an error in a configuration space of the first device.

8. The apparatus of any one of the claims 1 to 5, wherein
the first failure is detected based on a success rate of data transactions between the first device and the first port.

9. The apparatus of any one of the claims 1 to 8, further comprising a third port coupled to a third device.

10. The apparatus of claim 9, further comprising at least one of the following features:
(A) the first device is configured to perform a direct memory access (DMA) transfer to the third device;
(B) the third device comprises a graphics processing unit (GPU);
(C) the third device comprises a storage device.

11. The apparatus of any one of the claims 1 to 10, wherein
the first device is coupled to the second device via a peripheral component interconnect express (PCIe) interface.

12. The apparatus of any one of the claims 1 to 11, further comprising
a fourth port coupled to a host, and the controller being configured to communicate the active state of the first device to the host.

13. A method comprising:
assigning, by a controller, an active state to a first device coupled to a first port and a passive state to a second device coupled to a second port;
monitoring, by a scheduler, an operational status of the first device;
determining, by a routing unit, a first routing path between the first device and the first port for managing data traffic;
in response to detecting a first failure associated with the first device,
reassigning the active state to the second device and the passive state to the first device; and
determining, by the routing unit, a second routing path between the second device and the second port for managing data traffic.

14. The method of claim 13, wherein
the first device comprises a first network interface card (NIC) and the second device comprises a second NIC.

15. The method of claim 13 or 14, wherein
the first failure is detected based on a loss of electrical connectivity between the first device and the first port.
